# EUROPEAN PATENT APPLICATION

(11) **EP 4 610 305 A1**
(43) Date of publication of application: **03.09.2025**
(21) Application number: 24892492.0
(22) Date of filing: 28.05.2024
(51) Int. Cl.: C08L 3/02, C08L 101/16, C08K 5/09, C08K 5/56, C08J 5/18, B29B 9/06, B29C 48/92, B29C 48/88, B29C 48/04

(54) **STARCH-BASED BIODEGRADABLE COMPOSITION AND PREPARATION METHOD THEREFOR**

(30) Priority: 20.12.2023 KR 20230187128
(71) Applicant: Daesang Corporation, Seoul 03130 (KR)
(72) Inventor: HONG, Sung Jun, Seoul 07789 (KR); HUR, Sung Hwa, Seoul 07789 (KR); LEE, Seul Gi, Seoul 07789 (KR); YANG, Da Hae, Seoul 07789 (KR); KIM, Se Wook, Seoul 07789 (KR); HAM, Choong Hyun, Seoul 07789 (KR)
(74) Representative: Schiweck Weinzierl Koch Patentanwälte Partnerschaft mbB
(86) International application number: PCT/KR2024/007216
(87) International publication number: WO 2025/135329

(57) **Abstract**

The present invention relates to a starch-based biodegradable composition with excellent mechanical properties and durability, which includes thermoplastic starch, a biodegradable resin, a first compatibilizer, a second compatibilizer, and a lubricant, wherein the first compatibilizer is an epoxy compound and the second compatibilizer is a tricarboxylic acid, and a biodegradable film manufactured using the same.

## Description

### [Technical Field]

The present invention relates to a starch-based biodegradable composition including an epoxy compound and a carboxylic acid as compatibilizers, and a starch-based biodegradable film with improved durability and mechanical properties manufactured using the same.

### [Background Art]

Biodegradable polymers can be classified into petroleum-based biodegradable polymers and bio-based biodegradable polymers. Among them, there is a relatively high interest in environmentally friendly and renewable bio-based polymers. Polymers that are completely biodegradable in the natural environment contain functional groups in their main chain structure that can be decomposed by microorganisms. Among them, polyester-based polymers are the most extensively studied due to their excellent processability and the ease with which their biodegradability can be controlled. For example, polylactic acid (PLA) is a bio-based biodegradable polymer synthesized from lactic acid obtained by fermenting corn starch. PLA has a global market size of approximately 100,000 tons and is being widely applied in areas such as food packaging materials and containers, and even general plastic applications such as electronic device cases. However, PLA resin has drawbacks such as poor moldability, insufficient mechanical strength, and low heat resistance. Thus, thin-film products made from PLA are easily broken and have low temperature resistance, causing deformation when external temperatures rise.

Additionally, polybutylene adipate-co-terephthalate (PBAT), the most widely used petroleum-based biodegradable polyester polymer, is a copolymer resin containing aliphatic and aromatic components. While PBAT exhibits relatively good mechanical properties and processability, it has the disadvantages of weak structural strength and high manufacturing costs. To overcome these limitations of polyester resins such as inadequate physical properties and high manufacturing costs compared to non-biodegradable polymers, various research efforts have focused on incorporating eco-friendly biomass materials into composite formulations.

Starch, as a representative plant-based biomass, has been widely explored for blending with biodegradable resins to reduce costs and enhance biodegradability. However, starch-based materials generally suffer from reduced mechanical strength due to decomposition during processing or thermal decomposition, water leaching, and discoloration. These problems are caused by starch carbonization and starch-derived polysaccharides. When incorporating starch into biodegradable resins, the amount of starch added is limited because of the inherent hydrophilicity and reduced processability of starch. In addition, due to the inadequate compatibility between starch and biodegradable resins and the reduced binding force caused by starch incorporation, films containing starch have many problems such as low mechanical properties, poor durability, and strength degradation due to moisture absorption.

To solve these problems, numerous attempts have been made to develop biodegradable composite materials by reacting starch with plasticizers, etc. to impart thermoplasticity and adding compatibilizers. However, these approaches have not yet met the standards required by the industry. Consequently, there is a need for eco-friendly materials that can simultaneously achieve biodegradability, mechanical properties, and durability.

### [Disclosure]

### [Technical Problem]

One purpose of the present invention is to provide a starch-based biodegradable composition including compatibilizers capable of improving the mechanical properties of biodegradable composite materials by forming ester bonds with starch, and a method of manufacturing the same.

Another purpose of the present invention is to provide an eco-friendly starch-based biodegradable composition with excellent mechanical properties, such as tensile strength and elongation, by mixing two types of compatibilizers with distinct functions, and a biodegradable compound and a biodegradable film manufactured using the same.

### [Technical Solution]

One aspect of the present invention provides a starch-based biodegradable composition including thermoplastic starch, a biodegradable resin, a first compatibilizer, a second compatibilizer, and a lubricant, wherein based on 100 parts by weight of the mixture of the thermoplastic starch and the biodegradable resin, 0.1 to 2.0 parts by weight of the first compatibilizer, 0.1 to 2.0 parts by weight of the second compatibilizer, and 0.1 to 2.0 parts by weight of the lubricant are included, and the first compatibilizer is an epoxy compound, and the second compatibilizer is a tricarboxylic acid.

According to an embodiment, the first compatibilizer may be a chain extender, such as a cardanol epoxy compound.

According to an embodiment, the second compatibilizer may be citric acid.

According to an embodiment, the mixing ratio of the thermoplastic starch to the biodegradable resin may be 20 to 40 parts by weight: 60 to 80 parts by weight.

According to an embodiment, the thermoplastic starch may be prepared by reacting starch with a plasticizer and may further include a compatibilizer and a reaction initiator.

According to an embodiment, the starch usable in the thermoplastic starch may be one or more selected from the group consisting of corn starch, waxy corn starch, rice starch, potato starch, tapioca starch, wheat starch, sweet potato starch, and modified starches thereof, but is not limited thereto.

According to an embodiment, the biodegradable resin usable in the starch-based biodegradable composition may be one or more selected from the group consisting of polybutylene adipate terephthalate, polylactic acid, polycaprolactone, polybutylene succinate, polyglycolic acid, polyhydroxyalkanoate, polyhydroxybutyrate, copolymers thereof, and mixtures thereof, but is not limited thereto.

According to an embodiment, the lubricant usable in the starch-based biodegradable composition may be one or more selected from the group consisting of calcium stearate, glycerol monostearate, zinc stearate, ethylene bis stearamide, fatty acid ester, and magnesium stearate, but is not limited thereto.

Another aspect of the present invention provides a method of manufacturing a starch-based biodegradable composition, which includes mixing thermoplastic starch, a biodegradable resin, a first compatibilizer, a second compatibilizer, and a lubricant; and introducing the mixture into an extruder to react and extrude the mixture, wherein the first compatibilizer is an epoxy compound, and the second compatibilizer is a tricarboxylic acid. The first compatibilizer may be a cardanol epoxy compound, and the second compatibilizer may be citric acid, but the present invention is not limited thereto.

According to an embodiment, the reaction temperature of the extruder may range from 150 to 200 °C, but is not limited thereto.

According to an embodiment, the method may further include cooling, drying, and pelletizing the extruded composition after the high-temperature reaction in the extruder.

The tensile strength of the compound manufactured using the starch-based biodegradable composition according to an embodiment may range from 20 to 80 MPa.

The notched impact strength of the compound manufactured using the starch-based biodegradable composition according to an embodiment may range from 2.0 to 15 KJ/m².

Still another aspect of the present invention provides a biodegradable film manufactured using the starch-based biodegradable composition.

### [Advantageous Effects]

When an epoxy compound as a chain extender is used together with a carboxylic acid, such as citric acid, as compatibilizers to manufacture a starch-based biodegradable composition according to the present invention, additional ester bond formation may be induced between the hydroxyl (-OH) groups of starch and the carboxyl groups of the compatibilizers, which creates novel intermolecular networking, thereby enhancing the mechanical strength and stabilizing the quality of the biodegradable composite material.

Through the examples below, it can be seen that the biodegradable compound manufactured using a cardanol epoxy compound as a chain extender and citric acid as a reactive compatibilizer exhibits significantly improved mechanical properties, including tensile strength.

### [Best Mode of the Invention]

Hereinafter, the present invention will be described in detail with reference to the examples below. However, the following examples are provided for illustrative purposes to help understand the present invention and are not intended to limit the scope of the present invention. The present invention can be subject to various modifications and can be implemented in different forms, and it should be understood that all modifications, equivalents, or substitutes within the spirit and technical scope of the present invention are included.

Unless otherwise defined, all terms, including technical and scientific terms, used herein have the same meaning as commonly understood by a person of ordinary skill in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly defined otherwise herein.

A starch-based biodegradable composition according to an embodiment of the present invention includes thermoplastic starch, a biodegradable resin, a first compatibilizer, a second compatibilizer, and a lubricant, wherein based on 100 parts by weight of the mixture of the thermoplastic starch and the biodegradable resin, 0.1 to 2.0 parts by weight of the first compatibilizer, 0.1 to 2.0 parts by weight of the second compatibilizer, and 0.1 to 2.0 parts by weight of the lubricant are included, and the first compatibilizer is an epoxy compound, and the second compatibilizer is a tricarboxylic acid.

The first compatibilizer may be a chain extender and may be, for example, an epoxy compound such as a cardanol epoxy compound.

The second compatibilizer may be citric acid.

When a chain extender, such as an epoxy compound, is used together with a carboxylic acid, such as citric acid, as compatibilizers to manufacture a starch-based biodegradable composition, additional ester bond formation may be induced between the hydroxyl (-OH) groups of starch and the carboxyl groups of the compatibilizers, which creates novel intermolecular networking, thereby enhancing the mechanical strength and stabilizing the quality of the biodegradable composite material.

Through the examples below, it can be seen that the biodegradable compound manufactured using a mixture of a cardanol epoxy compound as a chain extender and citric acid as a reactive compatibilizer, as compatibilizers, exhibits significantly improved mechanical properties, including tensile strength.

According to an embodiment of the present invention, the thermoplastic starch is a starch prepared by reacting starch with a plasticizer and may further include a reaction initiator, a compatibilizer, or an additive.

The starch usable in the thermoplastic starch may be one or more selected from the group consisting of corn starch, waxy corn starch, rice starch, potato starch, tapioca starch, wheat starch, sweet potato starch, and modified starches thereof, but is not limited thereto.

The plasticizer usable in the thermoplastic starch may be, for example, one or more selected from the group consisting of glycerin, ethylene glycol, sorbitol, and pentaerythritol, but is not limited thereto. Based on the total weight of the thermoplastic starch, it is preferable to use the plasticizer in a range of 1 to 30 parts by weight. When the content of the plasticizer is below this range, the plasticization reaction does not occur. When the content of the plasticizer exceeds this range, over-plasticization occurs, and thus the composition becomes a paste.

The thermoplastic starch may further include a compatibilizer in addition to the starch and plasticizer. For example, the compatibilizer may be one or more selected from the group consisting of maleic anhydride, fumaric anhydride, acetylene dicarboxylic anhydride, glutaconic anhydride, 2-decenedioic anhydride, traumatic anhydride, muconic anhydride, glutamic anhydride, citraconic anhydride, mesaconic anhydride, itaconic anhydride, maleic acid, fumaric acid, acetylene dicarboxylic acid, glutaconic acid, 2-decenedioic acid, traumatic acid, muconic acid, glutamic acid, citraconic acid, mesaconic acid, and itaconic acid, but is not particularly limited thereto. Based on 100 parts by weight of the thermoplastic starch, it is preferable to use the compatibilizer in a range of 0.1 to 2 parts by weight.

After preparing or purchasing thermoplastic starch, the thermoplastic starch is mixed with a biodegradable resin, compatibilizers, and a lubricant, and allowed to react at high-temperature in an extruder to manufacture the starch-based biodegradable composition.

The biodegradable resin may be, for example, one or more selected from the group consisting of polybutylene adipate terephthalate (PBAT), polylactic acid (PLA), polybutylene succinate (PBS), polycaprolactone (PCL), polyglycolic acid (PGA), polyhydroxyalkanoate (PHA), polyhydroxybutyrate (PHB), copolymers thereof, and mixtures thereof, but is not limited thereto. The mixing ratio of the thermoplastic starch to the biodegradable resin may be 20 to 40 parts by weight: 60 to 80 parts by weight.

The lubricant usable in the starch-based biodegradable composition may be one or more selected from the group consisting of calcium stearate, glycerol monostearate, zinc stearate, ethylene bis stearamide, fatty acid ester, and magnesium stearate, but is not limited thereto.

Based on 100 parts by weight of the mixture of the thermoplastic starch and the biodegradable resin, it is preferable to use the lubricant in a range of 0.1 to 2 parts by weight.

The lubricant is used to improve dispersion and processability during compound manufacturing. When the lubricant is used below this range, processability becomes insufficient, leading to reduced dispersion and an increase in extrusion load. When the lubricant is used in an amount exceeding this range, the physical properties of the extrudate may be significantly reduced.

A method of manufacturing a starch-based biodegradable composition according to an embodiment of the present invention includes mixing thermoplastic starch, a first compatibilizer, a second compatibilizer, a biodegradable resin, and a lubricant; and introducing the mixture into an extruder to react and extrude the mixture. The first compatibilizer may be an epoxy compound as a chain extender, such as a cardanol epoxy compound, and the second compatibilizer may be a tricarboxylic acid, such as citric acid.

The starch-based biodegradable composition according to the present invention may be manufactured using a twin-screw extruder, etc., and the reaction temperature in the extruder may range from 150 to 200 °C, but is not limited thereto. After the high-temperature reaction in the extruder, the extruded starch-based biodegradable composition may be further cooled, dried, and pelletized. The biodegradable composition in pellet form is preferred due to its ease of mixing and processing during product manufacturing.

A biodegradable film manufactured using the starch-based biodegradable composition according to the present invention exhibits excellent biodegradability and mechanical properties. A compound manufactured using the starch-based biodegradable composition of the present invention may exhibit a tensile strength ranging from 20 to 80 MPa and a notched impact strength ranging from 2.0 to 15 KJ/m².

As such, due to their excellent mechanical strength, such as tensile strength and impact strength, and durability, the biodegradable injection-molded products manufactured using the starch-based biodegradable composition according to the present invention may be used in various applications, including food containers, trays, packaging materials, household items, and plastic bottles.

### [Modes of the Invention]

Hereinafter, the present invention will be described in detail through examples and a comparative example below, but these are provided for illustrative purposes and should not be construed as limiting the scope of the present invention.

### <Example 1>

### A) Preparation of thermoplastic starch

85 parts by weight of corn starch and 15 parts by weight of glycerin were mixed and introduced into a heated mixer. They were mixed at high-speed using a shovel mixer, and the uniformly mixed composition was input into a twin-screw extruder. The extruder barrel temperature was 140 to 145 °C, and the main screw speed was 300 rpm. The extrudate was pelletized to prepare thermoplastic starch.

### B) Preparation of starch-based biodegradable composition

20 parts by weight of the thermoplastic starch and 80 parts by weight of PLA were mixed. Afterward, based on 100 parts by weight of the mixture, 0.2 parts by weight of lubricant (Ca-stearate) and 1 part by weight of 2,3-epoxypropyl methacrylate were added.

The uniformly mixed composition was input into a twin-screw extruder. The extruder barrel temperature was 170 to 190 °C, and the main screw speed was180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The biodegradable composition was input into a film molding machine to prepare a biodegradable film with an average thickness of 25 to 35 µm. The film molding machine temperature was 150 to 170 °C, and the raw material feeding rate was 700 to 800 rpm.

### <Example 2>

### A) Preparation of thermoplastic starch

The method of preparing thermoplastic starch was the same as in Example 1.

### B) Preparation of biodegradable resin composition

20 parts by weight of the thermoplastic starch and 80 parts by weight of PLA were mixed. Afterward, based on 100 parts by weight of the mixture, 0.2 parts by weight of lubricant (Ca-stearate) and 1 part by weight of cardanol epoxy were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 3>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate) and 1 part by weight of 3-aminopropyltrimethoxysilane were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 4>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate) and 1 part by weight of maleic anhydride were added.

The uniformly mixed composition was input into a twin-screw extruder. The extruder barrel temperature was 170 to 190 °C, and the main screw speed was180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 5>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate) and 1 part by weight of citric acid were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 6>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate), 0.5 part by weight of cardanol epoxy, and 0.5 parts by weight of maleic anhydride were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 7>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate), 0.5 part by weight of cardanol epoxy, and 0.5 parts by weight of citric acid were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 8>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate), 0.5 part by weight of 3-aminopropyltrimethoxysilane, and 0.5 parts by weight of maleic anhydride were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Example 9>

### A) Preparation of thermoplastic starch

The method of preparing thermoplastic starch was the same as in Example 1.

### B) Preparation of starch-based biodegradable composition

20 parts by weight of the thermoplastic starch and 80 parts by weight of PLA were mixed. Afterward, 0.2 parts by weight of lubricant (Ca-stearate), 0.5 part by weight of 3-aminopropyltrimethoxysilane, and 0.5 parts by weight of citric acid were added.

The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Comparative Example 1>

### A) Preparation of thermoplastic starch

The method of preparing thermoplastic starch was the same as in Example 1.

### B) Preparation of starch-based biodegradable composition

20 parts by weight of thermoplastic starch, 80 parts by weight of PLA, and 0.2% of lubricant (Ca-stearate) were mixed. The uniformly mixed composition was input into a twin-screw extruder. The extruder barrel temperature was 170 to 190 °C, and the main screw speed was 180 to 200 rpm.

The extrudate discharged through an extruder die was water-cooled using a water channel and pelletized. The pellet was dried at 60 °C for 24 hours or more to prepare a biodegradable composition for injection molding.

The biodegradable composition was processed in a mechanical test specimen molding machine to prepare injection-molded biodegradable composite specimens. The injection molding temperature was 210 to 220 °C.

### C) Preparation of biodegradable film

The method of preparing the biodegradable film was the same as in Example 1.

### <Mechanical property evaluation>

The mechanical properties of the starch-based biodegradable composition (compound) specimens prepared in the above examples and comparative example were measured, and the results are shown in Table 1 below.

The tensile strength and elongation of each specimen were measured using a universal testing machine (UTM), and the impact strength was evaluated using the notched Izod impact test method.

Tensile strength specimens were manufactured according to ASTM D638 Type V, and tensile strength and elongation were measured using the UTM. Impact strength was measured using the notched Izod impact test method in accordance with ASTM D256 on 1/8-inch-thick specimens.

**[Table 1]**

| Classification | | Compar ative Example 1 | Example 1 | Example 2 | Example 3 | Example 4 |
|---|---|---|---|---|---|---|
| Total compatibilizer content (%) | | - | 1.0 | 1.0 | 1.0 | 1.0 |
| Compatibilizer | 2,3-Epoxypropyl methacrylate | - | 1.0 | - | - | - |
| | Cardanol epoxy | - | - | 1.0 | - | - |
| | 3-Aminopropyltrimethoxysilane | - | - | - | 1.0 | - |
| | Maleic anhydride | - | - | - | - | 1.0 |
| | Citric acid | - | - | - | - | - |
| Results | MFI (g/10 min, 190 °C) | 7.6 | 9.8 | 18.8 | 37.2 | 16.0 |
| | Tensile strength (MPa) | 50.2 | 51.2 | 51.0 | 56.9 | 52.6 |
| | Tensile strength change rate (%) | - | 1.99 | 1.59 | 13.35 | 4.78 |
| | Elongation (%) | 0.7 | 0.6 | 0.5 | 0.4 | 0.6 |
| | Notched impact strength (KJ/m²) | 4.7 | 4.5 | 3.8 | 2.8 | 4.0 |

**[Table 2]**

| Classification | | Example 5 | Example 6 | Example 7 | Example 8 | Example 9 |
|---|---|---|---|---|---|---|
| Total compatibilizer content (%) | | 1.0 | 1.0 | 1.0 | 1.0 | 1.0 |
| Compatibilizer | 2,3-Epoxypropyl methacrylate | - | - | - | - | - |
| | Cardanol epoxy | - | 0.5 | 0.5 | - | - |
| | 3-Aminopropyltrimethoxysilane | - | - | - | 0.5 | 0.5 |
| | Maleic anhydride | - | 0.5 | - | 0.5 | - |
| | Citric acid | 1.0 | - | 0.5 | - | 0.5 |
| Results | MFI (g/10 min, 190 °C) | 12.6 | 26.0 | 16.6 | 23.3 | 53.0 |
| | Tensile strength (MPa) | 61.1 | 50.8 | 63.8 | 47.2 | 50.9 |
| | Tensile strength change rate (%) | 21.71 | 1.20 | 27.09 | -5.98 | 1.39 |
| | Elongation (%) | 0.7 | 0.4 | 0.7 | 0.4 | 0.5 |
| | Notched impact strength (KJ/m²) | 4.8 | 4.7 | 4.5 | 4.5 | 4.4 |

As shown in Tables 1 and 2, the biodegradable compound prepared in Example 7 using a cardanol epoxy compound as a chain extender and citric acid as a reactive compatibilizer exhibited an improvement in tensile strength of at least 27% compared to the compound in Comparative Example. Additionally, it was observed that the elongation and notched impact strength were also superior.

## Claims

1. A starch-based biodegradable composition comprising:
thermoplastic starch;
a biodegradable resin;
a first compatibilizer;
a second compatibilizer; and
a lubricant,
wherein based on 100 parts by weight of the mixture of the thermoplastic starch and the biodegradable resin, 0.1 to 2.0 parts by weight of the first compatibilizer, 0.1 to 2.0 parts by weight of the second compatibilizer, and 0.1 to 2.0 parts by weight of the lubricant are included, and the first compatibilizer is an epoxy compound, and the second compatibilizer is a tricarboxylic acid.

2. The starch-based biodegradable composition of claim 1, wherein the first compatibilizer is a cardanol epoxy compound, and the second compatibilizer is citric acid.

3. The starch-based biodegradable composition of claim 1, wherein the biodegradable resin is one or more selected from the group consisting of polybutylene adipate terephthalate, polylactic acid, polycaprolactone, polybutylene succinate, polyglycolic acid, polyhydroxyalkanoate, polyhydroxybutyrate, copolymers thereof, and mixtures thereof.

4. The starch-based biodegradable composition of claim 1, wherein the lubricant is one or more selected from the group consisting of calcium stearate, glycerol monostearate, zinc stearate, ethylene bis stearamide, fatty acid ester, and magnesium stearate.

5. The starch-based biodegradable composition of claim 1, wherein the mixing ratio of the thermoplastic starch to the biodegradable resin is 20 to 40 parts by weight: 60 to 80 parts by weight.

6. A method of manufacturing a starch-based biodegradable composition, comprising:
mixing thermoplastic starch, a biodegradable resin, a first compatibilizer, a second compatibilizer, and a lubricant; and
introducing the mixture into an extruder to react and extrude the mixture,
wherein the first compatibilizer is an epoxy compound, and the second compatibilizer is a tricarboxylic acid.

7. The method of claim 6, wherein the first compatibilizer is a cardanol epoxy compound, and the second compatibilizer is citric acid.

8. The method of claim 6, wherein the reaction temperature of the extruder is in a range of 150 to 200 °C.

9. A biodegradable compound manufactured using the starch-based biodegradable composition according to claim 1, which has a tensile strength ranging from 20 to 80 MPa and a notched impact strength ranging from 2.0 to 15 KJ/m².

10. A biodegradable film manufactured using the starch-based biodegradable composition according to claim 1.
